# EUROPEAN PATENT APPLICATION

(11) **EP 3 225 460 A1**
(43) Date of publication of application: **04.10.2017**
(21) Application number: 17161376.3
(22) Date of filing: 16.03.2017
(51) Int. Cl.: B60N 2/70

(54) **CUSHION ASSEMBLY**

(30) Priority: 01.04.2016 GB 201605555
(71) Applicant: MIRUS Aircraft Seating Ltd., Hingham, Norfolk NR9 4LF (GB)
(72) Inventor: HALL, Phil, Hingham, Norfolk NR9 4LF (GB); MCGUIRE, Ben, Hingham, Norfolk NR9 4LF (GB)
(74) Representative: Cooper-Rolfe, Elizabeth Louise

(57) **Abstract**

A cushion assembly (10) is described having first (22) and second (24) foam layers which are fixedly connected to each other so as to be contiguous. The cushion assembly also includes a fire-retardant covering and finds particular use as the seat base of a vehicle seat, especially an aircraft seat.

## Description

The present invention relates to a cushion assembly. In particular, the present invention relates to a seat cushion assembly for a vehicle.

Cushions or cushion assemblies are known to be provided for forming a part of a seat, in particular the seat base of a vehicle seat. Cushion assemblies are also known to be provided for forming at least a part of a seat back support.

There are certain qualities that it is desirable for a cushion assembly intended to form a part of a seat, in particular a vehicle seat, to possess. For example, a cushion assembly that is intended to form the base, or seating portion, of a seat, will ideally provide both comfort and support to a person occupying the seat. Comfort is a particularly relevant factor for a vehicle seat, such as an aircraft seat, which may be occupied by a person for a significant duration. Known aircraft seats for example provide a seat cushion, or seat cushion assembly, having a rigid support frame for supporting the seat cushion. The disadvantage of such a frame is that they are usually relatively heavy, which is undesirable in a vehicle such as an aircraft.

Thus, rather than using support frames, it is possible for the appropriate support to be provided by the seat material. For example, seat cushions that utilise a foam material are known. The use of foam imparts a number of beneficial properties such as comfort, softness, even support, mouldability and shape memory. Different foams have different densities and varying degrees of firmness, shape-memory and rigidity.

Seats cushions intended for use in aircrafts preferably possess other qualities or characteristics which are particularly appropriate for the aircraft environment. For example they may preferably exhibit a high degree of energy absorption for impact resistance, and may also have the ability to float in water. Additionally, fire retardant aspects may be integrated into aircraft seats to reduce the spread of a potential fire.

Although a number of seat cushion assemblies are known, there is still a need to improve the previously proposed designs, in particular to provide an improved cushion assembly for a vehicle seat. Embodiments of the present invention seek to provide an improved cushion assembly for a vehicle seat, in particular for an aircraft seating system.

According to a first aspect of the present invention there is provided a cushion assembly for an aircraft seat, comprising: a first foam layer, and a second foam layer; wherein the first foam layer is secured to the second foam layer forming a cushion element, the cushion assembly further comprising a fire-retardant material which extends around the outer surface of the cushion element.

Thus, the first foam layer, is preferably fixedly secured to the second foam layer in a manner that is relatively permanent - i.e. it is difficult or impossible to separate the first and second foam layers without causing damage to one or both of the foam layers. The first foam layer may, for example, be secured to the second foam layer by means of an adhesive or glue such as, for example, a single part water based adhesive which securely bonds the first foam layer to the second foam layer.

It will be appreciated that, according to particular embodiments of the present invention, it is not intended for the first and second foam layers to be detachable. This offers the opportunity for improved quality control and/or improved durability of the cushion element. Moreover, the provision of a cushion element in which the first and second foam layers are fixedly secured to each other and, therefore, are formed and provided as a single unit, advantageously allows for the individual characteristics of the first and second foam layers to be carefully selected so as to be complimentary and/or to fulfil different criteria.

Thus, for example, the first foam layer may exhibit a higher firmness and/or exhibit a higher compressive strength and/or be more rigid and/or more lightweight than the second foam layer. Preferably, the properties of the first foam layer are selected to provide a high level of firmness or rigid support for the seat cushion assembly, without adding significant weight to the assembly. The first foam layer may preferably be readily mouldable to a required shape and size and may also beneficially comprise fire-retardant properties. The moulded density of the first foam layer may preferably be between 30g/litre and 65g/litre. More preferably the moulded density of the first foam layer is between 45g/litre and 60g/litre. The firmness of the first foam layer is preferably at least 200N. The density and/or of the first foam layer may be selected and/or varied to suit the particular requirements and the intended use of the cushion assembly. An example of a suitable material for the first foam layer is expanded polypropylene or EPP.

The second foam layer, which is provided above the first foam layer when the cushion assembly is provided in normal use, will preferably exhibit a greater softness and/or exhibit a lower compressive strength and/or be less rigid and/or more shape adaptive than the first foam layer. Thus, the properties of the second foam layer are selected to provide a softer, more comfortable layer, positioned above the more rigid supportive first foam layer. The moulded density of the second foam layer may preferably be between 40g/litre and 65g/litre. The firmness of the second foam layer is preferably between 100N and 400N. The density and/or firmness of the second foam layer may be selected and/or varied to suit the particular requirements and the intended use of the cushion assembly. An example of a suitable material for the first foam layer is polyurethane (UP) or graphite filled polyurethane or combustion modified high resilience polyurethane.

The first foam layer is provided beneath or below the second foam layer such that the upper surface of the first foam layer is secured to the lower surface of the second foam layer. Preferably the entirety of the upper surface of the first foam layer is secured to a corresponding surface area of the lower surface of the second foam layer, or visa versa. Preferably, the upper surface of the first foam layer is contiguous and/or conformal with the lower surface of the second foam layer. This continuity of connection between the first and second foam layers is beneficial in that it ensures a consistent and/or homogenous support for a user. According to particular embodiments, the absence of any pockets or cavities between the first and second foam layers results a superior cushion in terms of comfort and, moreover, in term of ease of manufacture. Indeed, the simple design provided by embodiments of the present invention enables the cushion assembly to manufactured easily and efficiently, leading to improved assembly times. The consolidation of seat assembly components results in an elegant and efficient design with reduced total seat part count.

Preferably, the fire-retardant material is provided around the cushion element so as to substantially extend around the outer surface of the cushion element. In this sense, the cushion assembly is wrapped in a fire-retardant material. The fire retardant material preferably extends around the entire surface of the cushion element thereby providing enhanced fire-protection properties as compared to cushion assemblies which merely provide fire-resistant elements as part of a cushion assembly. The fire retardant material may, for example, comprise a fire-block fabric.

The cushion assembly may further comprise a cover, or trim, which may be selected for aesthetic reasons and may be any material such as e.g. leather or a synthetic material. The cover extends around at least a part of the outer surface of the fire retardant material.

Thus, the cushion assembly provides a seat surface adapted to receive a user. Preferably, one or both of the foam layers may be ergonomically shaped and/or sized and/or configured to provide a seating surface upon which a user may sit.

According to a second aspect of the present invention there is provided a method of manufacturing a seat cushion assembly, comprising:
forming a first foam layer;
forming a second foam layer;
connecting the first and second foam layers such that the first foam layer underlies the second foam layer and wherein the upper surface of the first foam layer is secured to the lower surface of the second foam layer.

The method preferably involves moulding the first foam layer so as to have a desired shape and/or geometry. The first foam layers may comprise in-mould features which are added as part of the manufacturing/moulding process. The first foam layer is preferably rigid and therefore tends to maintains the shape formed during the moulding process. The second foam layer is preferably not rigid and therefore the lower surface of the second foam layer generally conforms to the shape of the upper surface of the first foam layer whilst the upper surface of the second foam layer tends to conform to the shape of the buttocks and legs of a user.

According to a third aspect of the present invention there is provided a seat having a cushion assembly according to the first aspect.

According to a fourth aspect of the present invention there is provided a vehicle, vessel and/or aircraft having a seat according to the third aspect.

Embodiments of the present invention advantageously provide a cushion assembly having superior support and/or comfort to known cushion assemblies, enabling a cushion element to be constructed from first and second foam layers selected to achieve a particular combination of characteristics. Moreover, as a consequence of the first and second foam layers being fixedly connected so as to hinder replacement of one or the other of the foam layers alone, a greater level of quality control can be achieved. This is particularly advantageous in the context of a vehicle seat or aircraft seat where it is often necessary for the seat manufacture to provide a warranty for the seat product. Moreover, the arrangement of the first and second foam layers so as to be contiguous or conformal with each other ensures a more even, and therefore more comfortable, seating surface for a user. The simple design also benefits from easy manufacture and a simplified assembly process.

Features of any given aspect may be combined with the features of any other aspect and the various features described herein may be implemented in any combination in a given embodiment.

For a better understanding of the present invention, and to show how the same may be carried into effect, reference will now be made by way of example, in which:
Figure 1 shows a seat cushion assembly according to an embodiment of the present invention;
Figure 2a shows a row of aircraft seats each comprising a cushion assembly according to another example embodiment of the present invention; and
Figure 2b shows a schematic view of the cushion assembly comprised in the row of aircraft seats shown in Figure 2b.

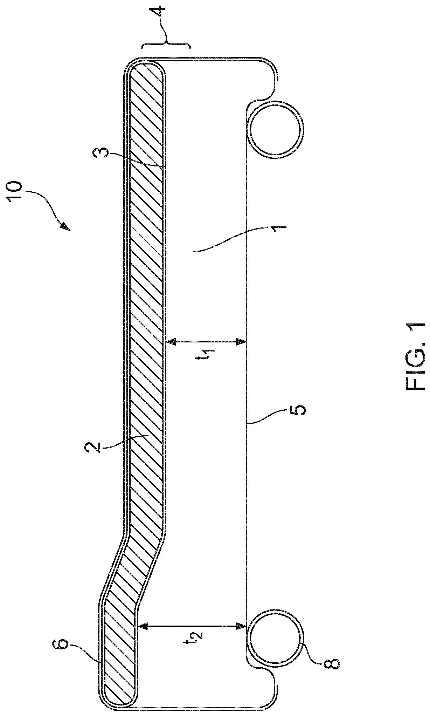

Figure 1 shows a cushion assembly 10 according to an embodiment of the present invention. Although in this example the cushion assembly forms a seat base, it will be appreciated that the cushion assembly may form e.g. the back of a seat.

The cushion assembly 10 shown in Figure 1 comprises a first foam layer 1 and a second foam layer 2. The upper surface of the first foam layer 1 is secured to the lower surface of the second foam layer 2 by means of an adhesive layer 3 to form a cushion element 4. The cushion element is entirely covered in a fire-block fabric 5 which entirely wraps around the outer surface of the cushion element. A lightweight leather trim or cover 6 is also provided which extends around the upper surface of the seat cushion assembly in normal use, as well as around the side edges.

The first foam layer is moulded such the geometry of the first foam layer and/or the resulting cushion assembly varies. Specifically, it can be seen from Figure 1, which shows a cross section through the seat cushion, that the thickness of the seat cushion varies. Thus, the upper surface of the first foam layer exhibits a sloping portion 7 such that the thickness of the first foam layer varies from a first thickness t1 to a second thickness t2. The thicker section of the cushion assembly is intended to be located at or near the back of the seat in use, thereby providing a more ergonomic profile and greater degree of support to the lumber region of a user. Furthermore, the lower surface of the first foam layer is also shaped so as to allow the cushion to be received on a pair of seat spars 8

The first foam layer is intended to provide support to a user in use and comprises expanded polypropylene having inherent fire resistive properties and a moulded density of around 55g/litre and a firmness of greater than 200N. It will be appreciated that "support" refers to the ability of the foam's ability to "push back" against weight and prevent the foam from changing shape. The second foam layer comprises combustion modified high resilience polyurethane having a moulded density of 65g/litre and a firmness of between 100N and 400N. It will be appreciated that "firmness" refers to a measurement of the surface feel of the foam and is a measure of the force expressed in Newtons required to compress a test piece to a specified percentage of its originally thickness. Both support and comfort affect the resulting comfort of the cushion and it is advantageous for the properties of the two layers to be selected to provide a desired level of both of these quantities.

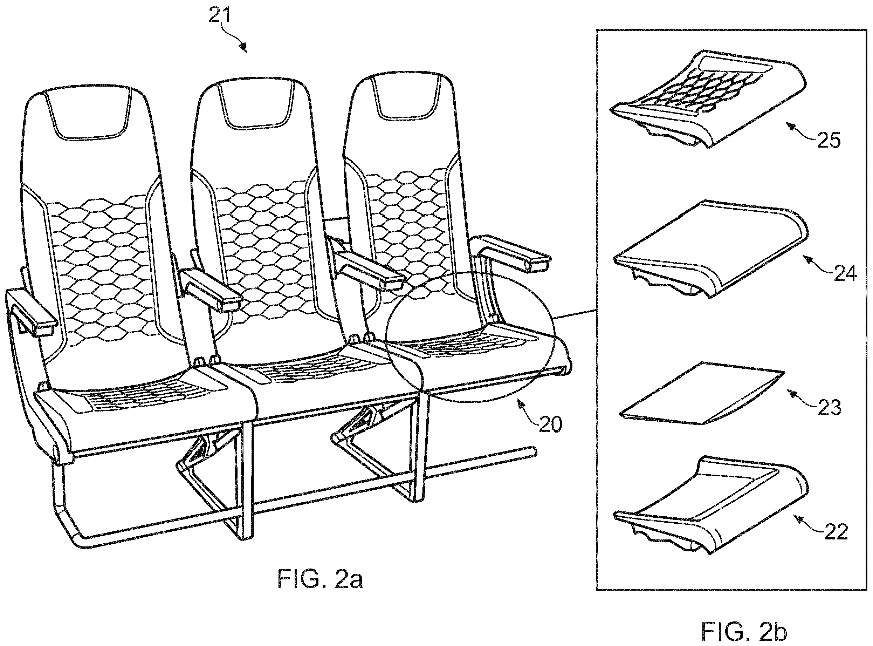

Figure 2a shows a row of aircraft seats 21 each comprising a cushion assembly 20 according to another example embodiment of the present invention. A schematic view of the cushion assembly 20 is shown in Figure 2b and comprises a first foam layer 22 and a second foam layer 23. The upper surface of the first foam layer 22 is secured to the lower surface of the second foam layer 2 by means of an adhesive layer to form a cushion element. The cushion element is entirely covered in a fire-block fabric to form a fire blocked cushion element 24. A lightweight leather trim or cover is also provided to the cushion assembly 25.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single feature or other unit may fulfil the functions of several units recited in the claims. Any reference signs in the claims shall not be construed so as to limit their scope.

## Claims

1. A cushion assembly for an aircraft seat, comprising;
a first foam layer, and
a second foam layer;
wherein the first foam layer is secured to the second foam layer to form a cushion element, the cushion assembly further comprising a fire-retardant material which extends around the outer surface of the cushion element.

2. A cushion assembly as claimed in claim 1, wherein the first foam layer is secured to the second foam layer by means of an adhesive.

3. A cushion assembly as claimed in claim 1, wherein the first foam layer has a higher compressive strength and/or a higher rigidity and/or is more lightweight than the second foam layer.

4. A cushion assembly as claimed in claim 1, wherein the moulded density of the first foam layer is between 30g/litre and 65g/litre.

5. A cushion assembly as claimed in claim 1, wherein the first foam layer comprises expanded polypropylene.

6. A cushion assembly as claimed in claim 1, wherein the second foam layer has a lower compressive strength and/or is less rigid and/or less firm and/or is more shape adaptive than the first foam layer.

7. A cushion assembly as claimed in claim 1 wherein the second foam layer comprises at least one of: polyurethane (UP), graphite filled polyurethane, or high resilience polyurethane.

8. A cushion assembly as claimed in claim 1, wherein the first foam layer underlies the second foam layer such that the upper surface of the first foam layer is secured to the lower surface of the second foam layer.

9. A cushion assembly as claimed in claim 1, wherein the first foam layer is substantially rigid.

10. A cushion assembly as claimed in claim 1, wherein the lower surface of the second foam layer is contiguous and/or conformal with the upper surface of the first foam layer.

11. A cushion assembly as claimed in claim 1, wherein the fire retardant material extends around the entire surface of the cushion element.

12. A cushion assembly as claimed in any preceding claim, further comprising a cover which extends around at least a part of the outer surface of the fire retardant material.

13. A cushion assembly as claimed in claim 1, wherein the first foam layer exhibits a greater firmness than the second foam layer.

14. A seat having a cushion assembly according to claim 1.

15. A vehicle, vessel and/or aircraft having a seat as claimed in claim 14.

16. A cushion assembly for an aircraft seat, comprising;
a first foam layer, and
a second foam layer;
the first foam layer being secured to the second foam layer to form a cushion element, the cushion assembly further comprising a fire-retardant material which extends around the outer surface of the cushion element,
wherein the first foam layer is substantially rigid and secured to the second foam layer by means of an adhesive, and wherein the lower surface of the second foam layer is contiguous and/or conformal with the upper surface of the first foam layer.
